# EUROPÄISCHE PATENTANMELDUNG

(11) **EP 4 738 616 A1**
(43) Veröffentlichungstag der Anmeldung: **06.05.2026**
(21) Anmeldenummer: 25210353.6
(22) Anmeldetag: 22.10.2025
(51) Int. Cl.: H01R 4/02, B60L 53/18, B60L 53/302, H01B 7/42, H01R 13/00

(54) **TEMPERIERBARE STROMLEITUNGSVORRICHTUNG, VERFAHREN ZU DEREN HERSTELLUNG UND VERFAHREN ZUM TEMPERIEREN EINER STROMLEITUNG**

(30) Priorität: 05.11.2024 DE 102024132186
(71) Anmelder: Witzenmann GmbH, 75175 Pforzheim (DE)
(72) Erfinder: Kurz, Fabian, 75331 Engelsbrand (DE); Radkowitsch, Florian, 75177 Pforzheim (DE)
(74) Vertreter: LBP Lemcke, Brommer & Partner Patentanwälte mbB

(57) **Zusammenfassung**

Beschrieben wird eine temperierbare Stromleitungsvorrichtung (1), aufweisend:
ein rohrförmiges Fluid-Leitungselement (2), bevorzugt aus einem elektrisch leitfähigen Werkstoff, insbesondere Metall, vorzugsweise Kupfer oder Aluminium einschließlich entsprechender Legierungen;
wenigstens zwei endständige Öffnungen (2a, 2a') des Fluid-Leitungselements (2), welche Öffnungen (2a, 2a') vorzugsweise an verschiedenen Enden des Fluid-Leitungselements (2) angeordnet sind;
einen Freiraum (3) innerhalb des Fluid-Leitungselements (2), welcher Freiraum (3) eine fluidleitende Verbindung zwischen den beiden Öffnungen (2a, 2a') schafft;
eine Litze (4) mit mehreren Litzendrähten, vorzugsweise aus Kupfer, die in dem Fluid-Leitungselement (2) geführt ist; und
wenigstens ein rohrförmiges Anschlussteil (5) aus einem elektrisch leitfähigen Werkstoff, insbesondere Metall, vorzugsweise Kupfer oder Aluminium einschließlich entsprechender Legierungen, das mit seinem einen Ende (5a) in eine der endständigen Öffnungen (2a, 2a') des Fluid-Leitungselements (2) eingesetzt und fluiddicht mit dem Fluid-Leitungselements (2) verbunden ist und das mit seinem anderen, freien Ende (5b) aus dem Fluid-Leitungselement (2) herausragt;
wobei der Freiraum (3) sich zumindest in Bereichen längs des Fluid-Leitungselements (2) um die Litze (4) herum erstreckt und mit einem Inneren (5c) des Anschlussteils (5) in Fluidverbindung steht; und
die Litze (4) oder die Litzendrähte in wenigstens einem Anschlussbereich (5d) mit dem Anschlussteil (5) elektrisch leitend verbunden ist.

## Beschreibung

Die Erfindung betrifft mit dem Anspruch 1 eine temperierbare Stromleitungsvorrichtung. Die temperierbare Stromleitungsvorrichtung umfasst ein rohrförmiges Fluid-Leitungselement, das bevorzugt aus einem elektrisch leitfähigen Werkstoff hergestellt ist, insbesondere aus Metall, vorzugsweise Kupfer oder Aluminium einschließlich entsprechender Legierungen. Sie umfasst weiterhin wenigstens zwei endständige Öffnungen des Fluid-Leitungselements, die vorzugsweise an verschiedenen Enden des Fluid-Leitungselements angeordnet sind. Und sie umfasst einen Freiraum innerhalb des Fluid-Leitungselements, der eine fluidleitende Verbindung zwischen den beiden Öffnungen schafft.

Eine ähnliche Stromleitungsvorrichtung ist in der parallelen Patentanmeldung DE102023113116.8 beschrieben, auf die vorliegend vollinhaltlich Bezug genommen wird.

Die Erfindung betrifft mit den Ansprüchen 13 bzw. 15 auch ein Verfahren zur Herstellung einer temperierbaren Stromleitungsvorrichtung sowie ein Verfahren zum Temperieren einer Stromleitung.

Elektromobilität wird heute oft als Maßnahme gegen den fortschreitenden Klimawandel gesehen. Zur Akzeptanzsteigerung von Elektrofahrzeugen ist es dabei erforderlich, die erforderlichen Ladezeiten zu verringern und die Reichweiten zu vergrößern. Hersteller wie Phoenix Contact bieten deshalb Gleichstrom (DC)-Schnelllade-Systeme an, die mit einer Ladeleistung von bis zu 350 kW einen Akku in zirka fünf Minuten für eine Reichweite von 100 km aufladen können. Höhere Ladeströme bedingen jedoch eine höhere Erwärmung und damit eine thermische Belastung des eingesetzten Materials. Um diese zu reduzieren, könnte eine Erhöhung der Leiterquerschnitte in Erwägung gezogen werden, was allerdings Nachteile bei der Handhabbarkeit durch geringe Flexibilität und das höhere Gewicht des Ladekabels mit sich brächte. Aus diesem Grund werden bei vorbekannten Systemen die DC-Ladestecker mit einem Medium gekühlt.

Der Erfindung liegt demgegenüber die Aufgabe zugrunde, die erreichbare Kühlleistung bei solchen Systemen weiter zu verbessern.

Aus der WO 2021/259638 A1 sind rohrartige Verbinder zwischen Anschlüssen von Batteriezellen bekannt, die aus einem elektrisch leitfähigen Werkstoff bestehen, um die Batteriezellen elektrisch zu kontaktieren, und die zugleich als Fluid-Leitungselemente für ein Temperierfluid dienen, um die Batteriezellen zu temperieren.

Der Erfindung liegt demgegenüber die Aufgabe zugrunde, die erreichbare Stromleitung bei solchen Systemen weiter zu verbessern.

Außerdem bietet z.B. die Paul Druseidt Elektrotechnische Spezialfabrik GmbH & Co. KG wassergekühlte Hohlleiterkabel an, die in komplexer Weise aus einer Vielzahl von Einzelkomponenten hergestellt sind. Insbesondere bei der Konfektionierung ist dabei eine hohe Anzahl an Konfektionierungsschritten erforderlich. Zudem sind die verwendeten Teile größtenteils nur zerspanend herstellbar und damit nicht kostengünstig in größeren Stückzahlen für eine Massenproduktion verfügbar.

Der Erfindung liegt deshalb weiterhin die Aufgabe zugrunde, die Herstellung von temperierbaren Stromleitungsvorrichtungen zu vereinfachen und dadurch kostengünstiger sowie massentauglich zu machen.

In diesem Zusammenhang sollen vorteilhafte Alternativen zu den in der genannten Patentanmeldung DE102023113116.8 beschriebenen Ausgestaltungen angegeben werden.

Dies wird erfindungsgemäß erreicht durch eine temperierbare Stromleitungsvorrichtung mit den Merkmalen des Anspruchs 1, durch ein Verfahren zur Herstellung einer temperierbaren Stromleitungsvorrichtung gemäß Anspruch 13 und durch ein Verfahren zum Temperieren einer Stromleitung gemäß Anspruch 15.

Vorteilhafte Weiterbildungen sind in den jeweiligen Unteransprüchen definiert.

Eine erfindungsgemäße temperierbare Stromleitungsvorrichtung weist auf: ein rohrförmiges Fluid-Leitungselement, bevorzugt aus einem elektrisch leitfähigen Werkstoff, insbesondere Metall, vorzugsweise aus Kupfer oder Aluminium einschließlich entsprechender Legierungen; wenigstens zwei endständige Öffnungen des Fluid-Leitungselements, welche Öffnungen vorzugsweise an verschiedenen Enden des Fluid-Leitungselements angeordnet sind; einen Freiraum innerhalb des Fluid-Leitungselements, welcher Freiraum eine fluidleitende Verbindung zwischen den beiden Öffnungen schafft; eine Litze mit mehreren Litzendrähten, vorzugsweise aus Kupfer, die in dem Fluid-Leitungselement geführt ist; und wenigstens ein rohrförmiges Anschlussteil aus einem elektrisch leitfähigen Werkstoff, insbesondere Metall, vorzugsweise Kupfer oder Aluminium einschließlich entsprechender Legierungen, das mit seinem einen Ende in eine der endständigen Öffnungen des Fluid-Leitungselements eingesetzt und fluiddicht mit dem Fluid-Leitungselements verbunden ist und das mit seinem anderen, freien Ende aus dem Fluid-Leitungselement herausragt. Der Freiraum erstreckt sich dabei zumindest in Bereichen längs des Fluid-Leitungselements um die Litze herum und steht mit einem Inneren des Anschlussteils in Fluidverbindung. Die Litze oder die Litzendrähte ist bzw. sind in wenigstens einem Anschlussbereich mit dem Anschlussteil elektrisch leitend verbunden. Bevorzugt können zusätzlich auch das Fluid-Leitungselements und das Anschlussteil stromleitend verbunden sein, sofern das Fluid-Leitungselement geeignet stromleitend ausgebildet ist.

Unter einer Litze (englisch: "stranded wire") wird hier und im Folgenden, wie in der Elektrotechnik allgemein üblich, ein aus relativ dünnen Einzeldrähten (Litzendrähten) bestehender und daher leicht zu biegender elektrischer Leiter verstanden. Es wird überwiegend Kupfer als Leiter verwendet, ohne dass die Erfindung hierauf beschränkt wäre. Auch ist die Erfindung nicht hinsichtlich der Abmessungen (Querschnitte) der Litzendrähte beschränkt, so dass diese grundsätzlich auch in Form von gebogenen bzw. biegbaren (Kupfer-)Stäben ausgeführt sein können.

Die Formulierung "um die Litze herum" kann auch beinhalten, dass der Freiraum zumindest lokal zwischen einzelnen Drähten oder Bündeln von Drähten der Litze oder sogar radial innenliegend befindlich ist, dass also die Litze um den Freiraum herum angeordnet ist. Letztendlich ist gemeint, dass die Litze von einem Temperierfluid quasi "umspült" werden kann.

Auf diese Weise fungieren das Anschlussteil und die Litze sowie ggf. auch das Fluid-Leitungselement gemeinsam als Stromleiter, was es ermöglicht, bei gleichem Außendurchmesser der Vorrichtung den möglichen (Querschnitts-)Anteil an temperierbarem Stromleiter deutlich zu erhöhen. Das Temperierfluid umströmt die Litzendrähte innerhalb des Freiraums und temperiert dabei gleichzeitig auch das Fluid-Leitungselement als solches, wodurch sich eine verbesserte Kühlleistung ergibt.

Die temperierbare Stromleitungsvorrichtung ist mittels des erfindungsgemäßen Verfahrens einfach, kostengünstig und in Serienfertigung herstellbar. Das Verfahren zur Herstellung einer temperierbaren Stromleitungsvorrichtung beinhaltet die folgenden Schritte, von denen einige zwar vorteilhaft, dennoch aber nur optional sind:
a) Herstellen eines rohrförmigen Fluid-Leitungselements aus einem vorzugsweise elektrisch leitfähigen Werkstoff, insbesondere Metall, vorzugsweise Kupfer oder Aluminium einschließlich entsprechender Legierungen, insbesondere indem zunächst durch Biegen oder Walzen von Blech ein Hohlkörper hergestellt wird, der dann an den Stößen verschweißt wird, vorzugsweise nach erfolgtem Einbringen einer Litze mit mehreren Litzendrähten, vorzugsweise aus Kupfer, deren Länge der gewünschten Länge in Schritt e) entspricht, in das Fluid-Leitungselement;
b) optional Ausbilden wenigstens eines gewellten Abschnitts des Fluid-Leitungselements, insbesondere durch Druckeinwirkung von außen oder von innen, vorzugsweise verbunden mit einem Stauchen der Litze;
c) optional Reinigen des Fluid-Leitungselements;
d) optional Anbringen einer EMV-Abschirmung und/oder einer Außenisolierung und/oder einer Innenisolierung, wobei die Isolierungen extrudiert sein können;
e) Ablängen des Fluid-Leitungselements einschließlich der optionalen EMV-Abschirmung, Innenisolierung und Außenisolierung auf eine gewünschte Länge;
f) optionales zusätzliches Einkürzen der optionalen EMV-Abschirmung, Innenisolierung und Außenisolierung;
g) Einsetzen wenigstens eines rohrförmigen Anschlussteils aus einem elektrisch leitfähigen Werkstoff, insbesondere Metall, vorzugsweise Kupfer oder Aluminium einschließlich entsprechender Legierungen, mit seinem einen Ende in eine der endständigen Öffnungen des Fluid-Leitungselements und fluiddichtes Verbinden des rohrförmigen Anschlussteils mit dem Fluid-Leitungselements, sodass das Anschlussteil mit seinem anderen, freien Ende aus dem Fluid-Leitungselement herausragt, und
h) elektrisch leitfähiges Verbinden der Litze oder der Litzendrähte in wenigstens einem Anschlussbereich mit dem Anschlussteil, verzugsweise durch Anpressen oder stoffschlüssiges Fügen.

Ein erfindungsgemäßes Verfahren zum Temperieren einer Stromleitung beinhaltet:
a) Bereitstellen einer erfindungsgemäßen Stromleitungsvorrichtung;
b) elektrisches Kontaktieren der Stromleitungsvorrichtung in dem Anschlussbereich, vorzugsweise in den beiden Anschlussbereichen; und
c) Leiten eines Temperierfluids, insbesondere Luft oder ein dielektrisches Öl, durch das Fluid-Leitungselement über die Öffnungen, also durch eine Öffnung hinein und durch die andere Öffnung wieder hinaus.

Es wird im Rahmen von Ausgestaltungen der Erfindung vorgeschlagen, eine elektrisch leitende, insbesondere flexible Verbindung (die genannte Stromleitungsvorrichtung) zu schaffen, die ein vorzugsweise gewelltes Rohr (das genannte Fluid-Leitungselement) oder fluidleitend miteinander verbundene RohrSegmente umfasst, welches Rohr bzw. Rohr-Segment-Anordnung elektrisch leitfähige Litzendrähte umhüllt und zusätzlich von einem Temperierfluid durchströmt werden kann.

Die Wellung, sofern vorhanden, kann dabei partiell erfolgen, also auf Rohrabschnitte beschränkt sein, und kann sowohl konzentrisch ringgewellt als auch wendelgewellt ausgebildet sein. Dabei sind - ausgehend von einem glatten Rohr - sowohl Wellen, die den Durchmesser erhöhen, als auch Wellen, die den Durchmesser verringern (vorzugsweise herstellbar durch hydraulisches bzw. mechanisches Umformen) sowie eine Kombination beider Wellenarten möglich.

Das Rohr ist vorzugsweise aus einem elektrisch gut leitfähigen Werkstoff hergestellt, beispielsweise Kupfer, höchst vorzugsweise aus einer Aluminium- oder Kupferlegierung. Es ist jedoch nicht auf eine solche Ausgestaltung beschränkt.

Das Rohr kann insbesondere nicht runde Querschnitte aufweisen, ggf. nur in Teilabschnitten, um beispielsweise mit Blick auf eine spätere Verwendung Engstellen im Bauraum begegnen zu können.

Bevorzugt ist das Rohr an seinen beiden Enden gleichartig ausgebildet und mit einer Öffnung zum Einkoppeln bzw. Auskoppeln des Temperierfluids versehen.

Die vorstehend beschriebene Vorrichtung zeichnet sich dadurch aus, dass sie größtenteils besonders kostengünstig endlos gefertigt werden kann.

Folgende Verfahrensschritte können in flexibler Kombination bei der Herstellung aufeinander folgen:
- Rohrschweißen (Herstellung des Rohrs durch Längsnaht-Schweißen), insbesondere mit bereits eingelegter Litze;
- Einsetzen und Fixieren des Anschlussteils
- Verpressen zumindest von Anschlussteil und Litze, vorzugsweise in bestimmten Bereichen;
- mechanisches Wellen und dabei Stauchen der gestreckten Litze für Flexibilität;
- Anbringen, z.B. durch Extrudieren, einer Innenisolierung des Rohres oder einer inneren Lage einer betreffenden Isolierung;
- Anbringung einer äußeren Wickel- und/oder Geflechtabschirmung (EMV-Abschirmung);
- Anbringen, z.B. durch Extrudieren, einer Außenisolierung;
- Trennen (Ablängen) der Vorrichtung;
- endständiges Einkürzen von Isolierung und Abschirmung;
- optional Montage eines Kabeldurchführungselements mit Abschirmungskontaktierung, z.B. für den Anschluss an ein Gehäuse oder dgl.

Eine Variante der Erfindung weist endständig ein zusätzliches Element zur Fluideinkopplung auf, welches es ermöglicht, eine Temperierfluid-Zuleitung dichtend an dem Anschlussteil anzubringen. Insbesondere für flüssige Temperierfluide erschient diese Variante vorteilhaft. Hierbei ist die endständige Verpressung von Anschlussteil und Litze und ggf. zusätzlich von Rohr und Litze fluiddicht abzudichten, was vorzugsweise über ein stoffschlüssiges Verfahren, wie Löten oder Schweißen, erfolgen kann. Zusätzlich oder alternativ kann auch durch eine gesteigerte Verpressung von geeigneten Werkstoffpaarungen für Anschlussteil, Rohr und Litze eine hinreichend dichte Verbindung hergestellt werden. Ein stoffschlüssiger Fügeprozess entfällt dann. Besonders bevorzugt sind in diesem Kontext weiche, elektrisch leitende Werkstoffe, insbesondere reines Kupfer. Zusätzlich kann ein Fließelement die Abdichtung durch Verpressung unterstützen, welches unter Druck in die Zwischenräume der Litze fließt und selbige gegenüber dem Anschlussteil und/oder dem umgeformten Rohrelement abdichtet. Insbesondere kann es vorteilhaft sein, einen weiteren weichen elektrisch leitenden Werkstoff einzubringen, z.B. relativ weiche Metalle oder elektrisch leitende Klebstoffe. Eine mögliche Alternative ist das Einbringen eines zusätzlichen (Kupfer-)Lots.

Darüber hinaus ist im Hinblick auf Kosten, Flexibilität und Lebensdauer eine Variante der beschriebenen Erfindung vorteilhaft, welche nicht ein einziges, durchgängiges Rohrelement (rohrförmiges Fluid-Leitungselement), sondern mehrere zusammengesetzte Rohrsegmente aufweist. Die endständigen Rohrsegmente bilden dann jeweils entsprechende Kabelschuhe und stellen eine mechanisch ausreichend feste und steife Struktur dar, sodass eine Kabeldurchführung mit Schirmungskontaktierung montiert werden und weiterhin ein Temperierfluid durch einen Durchgang die Litze temperieren kann. Hierbei erfüllt die oben erwähnte innere Isolierung oder Isolierungsschicht (insbesondere der EMV-Abschirmung) vorzugsweise zusätzlich die Funktion einer Fluid-Abdichtung.

Die Isolierung kann ggf. mit einem zusätzlichen Verpresselement auf dem betreffenden Rohrsegment fixiert werden. Vorzugsweise ist dieses Verpresselement Teil der Kabeldurchführung, beispielsweise kann es sich um einen Verpressring der Abschirmung handeln.

Bei einer Ausgestaltung zur Einkopplung eines flüssiges Temperierfluids kann ein zusätzliches Einkoppelelement (EKE; auch: Verbindungselement) verwendet werden, welches das Rohr bzw. das Anschlussteil fluiddicht kontaktiert und eine Schnittstelle zur Fluidversorgung darstellt. Dieses Verbindungselement ist vorzugsweise aus Kunststoff hergestellt, um eine elektrische Isolation zwischen Anschlussteil und Fluidversorgung darzustellen. Vorzugsweise erfolgt die Herstellung des Verbindungselements im Mehrkomponentenspritzguss, um ein Dichtelement integrieren zu können.

Das EKE kann zusätzlich so ausgeführt sein, dass eine Schnappfunktion integriert ist, die nach der Montage optional mit einem zusätzlichen Teil hintersichert werden kann, um dem Fluiddruck im Betrieb und Beschleunigungen bzw. Massenkräften während der Montage Stand zu halten.

Das EKE kann zusätzlich die Funktion eines Berührschutzes von spannungsbehafteten Teilen übernehmen.

Folgende Weiterbildungen der erfindungsgemäßen Stromleitungsvorrichtung haben sich in der Praxis als besonders vorteilhaft erwiesen:
Bei einer Ausgestaltung der erfindungsgemäßen Stromleitungsvorrichtung ist die Litze oder sind die Litzendrähte in dem Anschlussbereich an das Anschlussteil angelegt, vorzugsweise angepresst oder stoffschlüssig angebunden, oder umgekehrt.

Diese spezifische Anordnung ermöglicht eine direkte und effiziente elektrische Verbindung zwischen der Litze und dem Anschlussteil, was die Leitfähigkeit und die elektrische Leistungsfähigkeit der Vorrichtung verbessert. Durch die Anlegung der Litze oder der Litzendrähte an das Anschlussteil wird sichergestellt, dass der elektrische Kontakt stabil und zuverlässig ist, was insbesondere bei Anwendungen mit hohen Stromstärken oder in Umgebungen mit starken Vibrationen von Vorteil ist. Des Weiteren kann die Anlegung der Litze oder der Litzendrähte an das Anschlussteil vorzugsweise durch Anpressen oder stoffschlüssiges Anbinden erfolgen. Das Anpressen der Litze oder der Litzendrähte an das Anschlussteil stellt eine mechanisch feste Verbindung her, die zugleich eine gute elektrische Leitfähigkeit gewährleistet. Diese Methode ist besonders geeignet, um eine dauerhafte und belastbare Verbindung zu schaffen, die auch unter thermischen und mechanischen Belastungen stabil bleibt. Alternativ kann die Verbindung auch stoffschlüssig erfolgen, beispielsweise durch Löten oder Schweißen. Eine stoffschlüssige Verbindung bietet den Vorteil, dass sie eine homogene und sehr stabile Verbindung schafft, die sowohl mechanisch als auch elektrisch optimal ist. Diese Art der Verbindung ist besonders vorteilhaft, wenn eine hohe Zuverlässigkeit und Langlebigkeit der elektrischen Verbindung gefordert sind. Umgekehrt kann grundsätzlich auch eine Verbindung durch Umkehrung der Anordnung erfolgen, wobei das Anschlussteil an die Litze oder die Litzendrähte angelegt wird. Diese Flexibilität in der Verbindungsmethode ermöglicht es, die Vorrichtung an verschiedene Anforderungen und Einsatzbedingungen anzupassen.

Bei einer Ausgestaltung der erfindungsgemäßen Stromleitungsvorrichtung weist die Litze eine Länge auf, die einer Länge des Fluid-Leitungselements im Wesentlichen entspricht.

Auf diese Weise erhält man eine kompakte Ausführungsform, bei der insbesondere die Litze durch einfaches Verpressen der Enden des Fluid-Leitungselements relativ zu diesem festgelegt werden kann.

Eine wieder andere Ausgestaltung der erfindungsgemäßen Stromleitungsvorrichtung sieht vor, dass wenigstens ein Ende des Fluid-Leitungselements eine glattzylindrische Kontur aufweist, in die das Anschlussteil passgenau eingesetzt ist.

Diese glattzylindrische Kontur ermöglicht eine präzise und feste Verbindung zwischen dem Fluid-Leitungselement und dem Anschlussteil, wodurch die Fluiddichtheit und die mechanische Stabilität der Verbindung verbessert werden. Durch die glattzylindrische Kontur wird sichergestellt, dass das Anschlussteil ohne Spielraum in das Fluid-Leitungselement eingeführt werden kann, was die Dichtheit der Verbindung erhöht und das Risiko von Leckagen minimiert. Darüber hinaus wird durch die passgenaue Einsetzung des Anschlussteils in die glattzylindrische Kontur eine gleichmäßige Verteilung der mechanischen Belastungen auf die Verbindung gewährleistet, was die Langlebigkeit und Zuverlässigkeit der Stromleitungsvorrichtung erhöht.

Eine andere Weiterbildung der erfindungsgemäßen Stromleitungsvorrichtung sieht vor, dass das Anschlussteil an seinem freien Ende wenigstens eine umlaufende Nut aufweist, in die vorteilhafter Weise eine Dichtung, vorzugsweise ein Dichtungsring, eingesetzt oder einsetzbar ist.

Diese spezifische Gestaltung des Anschlussteils bringt mehrere technische Vorteile mit sich und verbessert die Funktionalität der Vorrichtung erheblich. Die umlaufende Nut am freien Ende des Anschlussteils dient als mechanisches Verbindungselement, das eine sichere und stabile Befestigung ermöglicht. Durch die Nut kann beispielsweise ein Dichtungsring oder ein anderes Befestigungselement aufgenommen werden, was die Fluiddichtheit der Verbindung zwischen dem Anschlussteil und einem weiteren Bauteil, wie einem Schlauch oder einer weiteren Leitung, verbessert. Dies ist besonders wichtig, um Leckagen zu verhindern und die Integrität des Fluidtransports innerhalb der Vorrichtung zu gewährleisten.

Eine vorteilhafte Weiterbildung der erfindungsgemäßen Stromleitungsvorrichtung sieht vor, dass das Anschlussteil an seinem in das Fluid-Leitungselement eingesetzten einen Ende eine sich über zumindest einen Teilumfang erstreckende, stirnseitig öffnende Ausnehmung aufweist, in der die Litze mit ihrem einen Ende angeordnet ist.

Diese spezifische Gestaltung des Anschlussteils ermöglicht eine verbesserte mechanische und elektrische Verbindung zwischen der Litze und dem Anschlussteil. Die stirnseitig öffnende Ausnehmung bietet eine definierte Positionierung und Fixierung der Litze, wodurch eine stabile und dauerhafte Verbindung gewährleistet wird. Dies ist besonders wichtig in Anwendungen, bei denen die Stromleitungsvorrichtung mechanischen Belastungen oder Vibrationen ausgesetzt ist, da die Ausnehmung die Litze sicher hält und ein Lösen oder Verrutschen verhindert. Darüber hinaus verbessert die Ausnehmung die elektrische Kontaktfläche zwischen der Litze und dem Anschlussteil, was zu einer geringeren elektrischen Übergangswiderstand und somit zu einer effizienteren Stromübertragung führt. Die fluiddichte Verbindung des Anschlussteils mit dem Fluid-Leitungselement bleibt durch diese Ausgestaltung unberührt, da die Ausnehmung lediglich an der Stirnseite des Anschlussteils angebracht ist und somit die Dichtheit der Verbindung nicht beeinträchtigt. Durch die Anordnung der Litze in der Ausnehmung wird zudem eine gleichmäßige Verteilung des elektrischen Stroms entlang der Kontaktfläche erreicht, was die Lebensdauer der Verbindung erhöht und die Gefahr von Hotspots oder lokalen Überhitzungen minimiert.

Eine besonders vorteilhafte Weiterbildung der erfindungsgemäßen Stromleitungsvorrichtung sieht vor, dass der Teilumfang etwa dem halben Umfang des Anschlussteils entspricht.

Diese spezifische Gestaltung des Anschlussteils ermöglicht eine verbesserte mechanische Stabilität und Festigkeit der Verbindung zwischen dem Anschlussteil und dem Fluid-Leitungselement. Da das Anschlussteil mit seinem einen Ende in eine der endständigen Öffnungen des Fluid-Leitungselements eingesetzt und fluiddicht verbunden ist, gewährleistet der halbe Umfang eine gleichmäßige Verteilung der Kräfte und minimiert potenzielle Schwachstellen, die zu einem mechanischen Versagen führen könnten. Ein weiterer Vorteil dieser Ausführungsform liegt in der verbesserten elektrischen Leitfähigkeit. Da die Litze oder die Litzendrähte in wenigstens einem Anschlussbereich mit dem Anschlussteil elektrisch leitend verbunden sind, sorgt der halbe Umfang des Anschlussteils für eine effizientere Übertragung des elektrischen Stroms. Die größere Kontaktfläche zwischen den Litzendrähten und dem Anschlussteil reduziert den elektrischen Widerstand und minimiert Energieverluste. Dies ist besonders wichtig in Anwendungen, bei denen eine hohe elektrische Effizienz gefordert ist.

Noch eine vorteilhafte Ausgestaltung der erfindungsgemäßen Stromleitungsvorrichtung sieht vor, dass die Litze oder die Litzendrähte über den Teilumfang aufgefächert sind.

Durch das Auffächern der Litze oder der Litzendrähte wird eine vergrößerte Kontaktfläche geschaffen, die eine effizientere elektrische Verbindung ermöglicht. Dies führt zu einer Reduktion des elektrischen Widerstands an den Verbindungsstellen, was wiederum die Leitfähigkeit der gesamten Stromleitungsvorrichtung erhöht. Zudem wird durch das Auffächern eine gleichmäßigere Verteilung des elektrischen Stroms über die gesamte Kontaktfläche erreicht, was Hotspots und damit verbundene Überhitzungsprobleme minimiert. Diese gleichmäßige Verteilung des Stroms trägt auch zur Verlängerung der Lebensdauer der Vorrichtung bei, da die Belastung auf die einzelnen Litzendrähte reduziert wird. Darüber hinaus verbessert das Auffächern der Litze oder der Litzendrähte die mechanische Stabilität der Verbindung, da die Kräfte, die auf die Litze wirken, besser verteilt werden. Dies ist besonders wichtig in Anwendungen, bei denen die Stromleitungsvorrichtung mechanischen Vibrationen oder anderen äußeren Einflüssen ausgesetzt ist.

Besonders vorteilhaft ist eine Weiterbildung der erfindungsgemäßen Stromleitungsvorrichtung, bei der die Litze oder die Litzendrähte im Bereich der Ausnehmung von einem Ringteil aus einem elektrisch leitfähigen Werkstoff, insbesondere Metall, vorzugsweise Kupfer oder Aluminium einschließlich entsprechender Legierungen, bevorzugt eng anliegend umfangen sind, wobei das Ringteil eine Außenkontur aufweist, die einer Form der Ausnehmung im Wesentlichen entspricht und so das Anschlussteil möglichst komplettiert.

Durch das Umfassen der Litze oder der Litzendrähte mit einem Ringteil ist eine verbesserte mechanische Stabilität und elektrische Leitfähigkeit gewährleistet. Das Ringteil fungiert als eine Art Klemme oder Halterung, die die Litze oder die Litzendrähte in einer festen Position hält und gleichzeitig eine zuverlässige elektrische Verbindung sicherstellt. Dies ist besonders wichtig in Anwendungen, bei denen die Stromleitungsvorrichtung mechanischen Belastungen oder Vibrationen ausgesetzt ist, da das Ringteil die Litze oder die Litzendrähte vor Bewegungen schützt, die zu einem Verlust der elektrischen Verbindung führen könnten. Darüber hinaus weist das Ringteil eine Außenkontur auf, die der Form der Ausnehmung im Wesentlichen entspricht. Diese Passgenauigkeit sorgt dafür, dass das Ringteil fest in der Ausnehmung sitzt und keine unerwünschten Bewegungen oder Lockerungen auftreten.

Ganz besonders vorteilhaft ist eine Ausgestaltung der erfindungsgemäßen Stromleitungsvorrichtung, bei der die Litze oder die Litzendrähte im Bereich der Ausnehmung (zusätzlich) an eine Innenseite des Fluid-Leitungselements angelegt sind, vorzugsweise über das genannte Ringteil.

Diese spezifische Anordnung der Litze oder der Litzendrähte innerhalb des Fluid-Leitungselements ermöglicht eine verbesserte elektrische und thermische Verbindung zwischen den Komponenten der Vorrichtung. Die Litze oder die Litzendrähte werden dabei so positioniert, dass sie in engem Kontakt mit der Innenseite des Fluid-Leitungselements stehen, wodurch eine effizientere Wärmeübertragung und eine verbesserte elektrische Leitfähigkeit gewährleistet werden - insbesondere, wenn auch das Fluid-Leitungselement elektrisch leitfähig ausgebildet ist. Diese Anordnung trägt außerdem dazu bei, die Wärme, die durch den elektrischen Stromfluss erzeugt wird, gleichmäßiger entlang der Länge des Fluid-Leitungselements zu verteilen, was zu einer verbesserten Temperaturregelung der gesamten Vorrichtung führt.

Vorteilhaft ist auch eine Ausgestaltung der erfindungsgemäßen Stromleitungsvorrichtung, bei der das Anschlussteil einen geraden, vorzugsweise zentralen, Leitungskanal aufweist und die Litze in Verlängerung des Leitungskanals und, vorzugsweise im Anschluss an die beschriebene Auffächerung, axial von diesem beabstandet angeordnet ist.

Der gerade Leitungskanal ermöglicht eine gleichmäßige und ungehinderte Strömung des Fluids, was die Gesamtleistung der Vorrichtung optimiert. Diese Konstruktion minimiert Turbulenzen und Druckverluste, die in komplexeren oder gebogenen Kanälen auftreten könnten. Darüber hinaus ist die Litze in Verlängerung des Leitungskanals und, vorzugsweise im Anschluss an die Auffächerung, axial von diesem beabstandet angeordnet. Diese Anordnung stellt sicher, dass die Litze optimal positioniert ist, um eine effiziente elektrische Verbindung zu gewährleisten, während gleichzeitig der Freiraum um die Litze herum erhalten bleibt, der für die Fluidleitung und Temperierung notwendig ist. Die axial beabstandete Anordnung der Litze nach der Auffächerung sorgt dafür, dass die Litze nicht direkt vor Leitungskanal liegt, sondern beabstandet davon, um die Fluidführung nicht zu behindern.

Weitere Vorteile bietet eine alternative Ausgestaltung der erfindungsgemäßen Vorrichtung, bei der ein Leitungskanal des Anschlussteils an dessen in das das Fluid-Leitungselement eingesetztem Ende seitlich in Richtung einer Wandung des Fluid-Leitungselements abknickt, wobei das Anschlussteil einen inneren Vorsprung aufweist, der sich etwa zentral innerhalb des Fluid-Leitungselements axial über den Leitungskanal hinaus erstreckt.

Diese spezifische Anordnung des Leitungskanals ermöglicht eine verbesserte Führung des Fluids innerhalb des Systems, indem der Kanal das Fluid gezielt in Richtung der Wandung lenkt, was zu einer gleichmäßigeren Verteilung und effizienteren Nutzung des Temperierfluids führen kann. Darüber hinaus weist das Anschlussteil einen inneren Vorsprung auf, der sich etwa zentral innerhalb des Fluid-Leitungselements axial über den Leitungskanal hinaus erstreckt. Dieser innere Vorsprung dient mehreren Zwecken: Erstens stabilisiert er die Position der Litze innerhalb des Fluid-Leitungselements, indem er verhindert, dass die Litze sich seitlich bewegt oder verlagert, was die elektrische Verbindung und die mechanische Integrität der Vorrichtung verbessert. Zweitens kann der Vorsprung als eine Art Strömungsbrecher fungieren, der die Strömung des Fluids innerhalb des Leitungselements beeinflusst und möglicherweise Turbulenzen reduziert oder gezielt hervorruft, was wiederum die Effizienz der Temperierung erhöht. Die Kombination dieser Merkmale führt zu einer verbesserten Funktionalität der Stromleitungsvorrichtung, indem sie sowohl die elektrische Leitfähigkeit als auch die thermische Effizienz optimiert.

Noch eine Weiterbildung der erfindungsgemäßen Stromleitungsvorrichtung sieht vor, dass der genannte Vorsprung radial von der Wandung des Fluid-Leitungselements beabstandet ist.

Durch diese Anordnung wird sichergestellt, dass der Vorsprung nicht direkt an der Wandung des Fluid-Leitungselements anliegt, was potenziell die Gefahr von mechanischen Spannungen oder Beschädigungen reduziert, die durch Bewegungen, thermische Ausdehnung oder mechanische Belastungen entstehen könnten. Darüber hinaus ermöglicht die radiale Beabstandung des Vorsprungs eine verbesserte Wärmeableitung, da der Vorsprung nicht in direktem Kontakt mit der Wandung des Fluid-Leitungselements steht und somit eine bessere Fluidzirkulation um den Vorsprung herum gewährleistet ist. Dies kann besonders vorteilhaft sein, wenn die Stromleitungsvorrichtung in Anwendungen eingesetzt wird, bei denen eine effiziente Wärmeableitung entscheidend ist, um eine Überhitzung der Komponenten zu verhindern und die Lebensdauer der Vorrichtung zu verlängern.

Eine wieder andere Weiterbildung der erfindungsgemäßen Stromleitungsvorrichtung sieht vor, dass der Vorsprung eine ebene Oberseite aufweist, an der die Litze oder die Litzendrähte befestigt ist/sind.

Der Vorsprung dient somit als eine strukturierte Befestigungsfläche innerhalb des rohrförmigen Anschlussteils, was die mechanische Stabilität und die elektrische Verbindung der Litze oder der Litzendrähte erheblich verbessert. Die ebene Oberseite des Vorsprungs bietet eine gleichmäßige und stabile Fläche, die eine zuverlässige und dauerhafte Befestigung der Litze oder der Litzendrähte ermöglicht. Dies ist besonders wichtig, um eine konstante elektrische Verbindung sicherzustellen und mechanische Belastungen zu minimieren, die durch Vibrationen oder thermische Ausdehnungen entstehen könnten. Durch die Befestigung der Litze oder der Litzendrähte an der ebenen Oberseite des Vorsprungs wird zudem die Kontaktfläche maximiert, was die elektrische Leitfähigkeit optimiert und den Widerstand minimiert. Dies führt zu einer effizienteren Stromübertragung und reduziert die Wärmeentwicklung innerhalb der Stromleitungsvorrichtung. Darüber hinaus ermöglicht die Positionierung der Litze oder der Litzendrähte auf der ebenen Oberseite des Vorsprungs eine bessere Ausrichtung und Führung innerhalb des Fluid-Leitungselements, was die Gesamteffizienz der Vorrichtung weiter steigert.

Eine besonders vorteilhafte Ausgestaltung der erfindungsgemäßen Stromleitungsvorrichtung sieht vor, dass der Vorsprung eine abgerundete Unterseite aufweist, deren Außenkontur sich parallel zu einer Innenkontur des Fluid-Leitungselements erstreckt.

Durch die Abrundung wird die Wahrscheinlichkeit von scharfen Kanten oder Ecken minimiert, die potenziell zu Turbulenzen oder unerwünschten Strömungswiderständen führen könnten. Dies trägt zu einer gleichmäßigeren und effizienteren Fluidströmung bei, was wiederum die Gesamtleistung und Zuverlässigkeit der Stromleitungsvorrichtung verbessert. Darüber hinaus erstreckt sich die Außenkontur des Vorsprungs parallel zu einer Innenkontur des Fluid-Leitungselements. Dies reduziert die Möglichkeit von mechanischen Beschädigungen, die die Funktionalität der Vorrichtung beeinträchtigen könnten.

Eine weitere Ausgestaltung der erfindungsgemäßen Stromleitungsvorrichtung sieht vor, dass das Anschlussteil an seinem freien Ende einen gleichen oder einen anderen, speziell einen kleineren Außendurchmesser aufweist als das Fluid-Leitungselement.

Der kleinere Außendurchmesser des freien Endes des Anschlussteils ermöglicht eine einfachere und präzisere Verbindung mit externen Komponenten oder Systemen. Dies kann insbesondere bei der Integration der Stromleitungsvorrichtung in bestehende Systeme von Vorteil sein, da es die Kompatibilität und die Anpassungsfähigkeit erhöht. Dabei kann das Anschlussteil zwischen dem genannten freien Ende und der Anbindung des Fluid-Leitungselements eine umlaufende Schulter aufweisen, die für eine Angleichung der jeweiligen Außendurchmesser sorgt und als Anschlag für etwaige externe (Leitungs-) Komponenten dienen kann, die auf das freie Ende des Anschlussteils aufgesteckt werden.

Bei noch einer anderen Ausgestaltung der erfindungsgemäßen Stromleitungsvorrichtung ist das Anschlussteil an wenigstens einem Ende bzw. an seinem freien Ende als normierter Fluid-Anschlussstutzen, insbesondere VDA-Anschlussstutzen, ausgebildet, wobei eine Mündung des Anschlussstutzens eine betreffende Öffnung des Fluid-Leitungselements bildet.

Somit kann das Anschlusselement ohne Weiteres axial fluidleitend mit einer weiteren Fluidleitung zum Zuführen oder Abführen des Temperierfluids verbunden werden.

Bei einer wieder anderen Ausgestaltung der erfindungsgemäßen Stromleitungsvorrichtung ist zwischen dem Fluid-Leitungselement und der Litze wenigstens ein Abstandhalter angeordnet, vorzugsweise ein ringförmiger Abstandhalter mit umfänglich beabstandeten Vorsprüngen.

Dadurch wird für eine sichere Durchströmung des Fluid-Leitungselements und eine sichere Umströmung der Litze mit dem Temperierfluid gesorgt.

Bei einer anderen Ausgestaltung der erfindungsgemäßen Stromleitungsvorrichtung sind die Litzendrähte in wenigstens einem Abschnitt miteinander verbunden, vorzugsweise stoffschlüssig, sodass die Litze in dem Abschnitt einen verringerten Querschnitt aufweist, und das Fluid-Leitungselement ist in dem genannten Abschnitt an mehreren, in Umfangsrichtung voneinander beabstandeten Positionen, vorzugsweise mindestens drei gleichmäßig voneinander beabstandeten Positionen, gegen die Litze verpresst, wobei höchst vorzugsweise Fluid-Leitungselement und Litze bei den genannten Positionen zusätzlich stoffschlüssig verbunden sind.

Auf diese Weise lässt sich sicherstellen, eine sichere Durchströmung des Fluid-Leitungselements und eine sichere Umströmung der Litze mit dem Temperierfluid erfolgt.

Bei noch einer anderen Ausgestaltung der erfindungsgemäßen Stromleitungsvorrichtung sind die Litzendrähte an wenigstens einem ringförmigen Halteelement gehalten, das bei einer axialen Position in das Fluid-Leitungselement eingesetzt ist und sich an mehreren Stellen von innen an dem Fluid-Leitungselement abstützt, welches Halteelement einen zentralen Durchbruch zur Fluiddurchleitung und vorzugsweise an seiner Außenseite eine Mehrzahl von Aufnahmen für einzelne Litzendrähte oder Bündel von Litzendrähten aufweist.

Auch auf diese Weise lässt sich sicherstellen, eine sichere Durchströmung des Fluid-Leitungselements und eine sichere Umströmung der Litze mit dem Temperierfluid erfolgt.

Bei wieder einer anderen Ausgestaltung der erfindungsgemäßen Stromleitungsvorrichtung ist in dem Fluid-Leitungselement in einem Bereich ein elastisches Element eingesetzt, welches Element lokal eine Kraft nach außen gegen eine Innenseite des Fluid-Leitungselements ausübt und die Litzendrähte an der Innenseite in Anlage bringt.

Dadurch wird zusätzlich oder alternativ für eine sichere Durchströmung des Fluid-Leitungselements und eine sichere Umströmung der Litze mit dem Temperierfluid gesorgt.

In Weiterbildung dieser Idee kann noch vorgesehen sein, dass das elastische Element aus einer Formgedächtnislegierung besteht oder als Geflechthülse aus Federstahl ausgebildet ist, vorzugsweise nach Art eines Stents bzw. einer Gefäßstütze, wie sie aus der Medizin grundsätzlich bekannt ist.

Um speziell bei Ladevorgängen entstehende EM-Strahlung abschirmen zu können, ist bei einer bevorzugten Ausgestaltung das Fluid-Leitungselement zumindest abschnittweise, bevorzugt in einem Abschnitt zwischen den beiden Öffnungen, von einer elektromagnetisch wirksamen (EMV-) Abschirmung umgeben, welche Abschirmung vorzugsweise umfasst: eine erste elektrische Isolierumhüllung, die außen auf dem Fluid-Leitungselement angeordnet ist; eine EMV-Abschirmschicht, insbesondere aus einem Metallgeflecht; und eine zweite elektrische Isolierumhüllung, die außen auf der EMV-Abschirmschicht angeordnet ist. Die erste elektrische Isolierumhüllung kann eine thermisch und/oder elektrisch isolierende Außenisolierung sein, die vorzugsweise durch Extrusion von außen auf das Fluid-Leitungselement aufgebracht ist.

Die zweite elektrische Isolierumhüllung kann eine thermisch und/oder elektrisch isolierende Innenisolierung sein, die vorzugsweise durch Extrusion von innen auf das Fluid-Leitungselement aufgebracht ist und die höchst vorzugsweise fluiddicht ausgebildet ist.

Außerdem kann vorgesehen sein, dass außen an dem Fluid-Leitungselement (speziell auf der ersten Isolierumhüllung) ein Kabeldurchführungselement angebracht ist, welches die Abschirmung kontaktiert, z.B. für den Anschluss an ein Gehäuse oder dgl.

Es wurde schon erwähnt, dass bei einer besonders vorteilhaften Weiterbildung der erfindungsgemäßen Stromleitungsvorrichtung das Fluid-Leitungselement zumindest in einem Abschnitt flexibel ausgebildet ist, insbesondere gewellt, vorzugsweise ringgewellt oder wendelgewellt.

So lässt sich die Vorrichtung auch an beengte Bauräume anpassen.

Um diesen Aspekt noch zu verbessern und zugleich eine äußerst leichtgewichtige Bauform zu schaffen, sieht eine wieder andere Ausgestaltung der erfindungsgemäßen Stromleitungsvorrichtung vor, dass das Fluid-Leitungselement nicht aus einem einzigen Teil, sondern aus mehreren, voneinander beabstandeten Segmenten gebildet ist, von den wenigstens eines das Anschlussteil aufweist, wobei die Segmente mittels einer fluiddicht ausgebildeten Isolierung miteinander verbunden sind. Dabei kann vorzugsweise zusätzlich eine EMV-Abschirmschicht vorhanden sein, welche die Isolierung umgibt und gemeinsam mit dieser außen an den Segmenten festgelegt ist. Dies kann vorzugsweise mittels äußerer Verpressringe geschehen, höchst vorzugsweise gemeinsam mit einer weiteren Isolierung, die ihrerseits die genannte EMV-Abschirmschicht umgibt.

Eine Weiterbildung des erfindungsgemäßen Verfahrens sieht vor, dass das Einbringen der Litze erfolgt durch Einlegen der Litze in das Fluid-Leitungselement bei dessen Herstellung in Schritt a) und gemeinsames Ablängen in Schritt e).

Dies hat sich vor der Durchführung her als besonders einfach und kostengünstig erwiesen.

Eine andere Weiterbildung des erfindungsgemäßen Verfahrens sieht vor, dass das Anschlussteil und die Litze in dem Anschlussbereich stoffschlüssig miteinander verbunden werden, insbesondere geschweißt, gelötet oder geklebt.

Dies sorgt für eine gute Verbindungssicherheit und dementsprechend für eine lange Haltbarkeit bzw. Standzeit.

Außerdem sieht noch eine andere Weiterbildung des erfindungsgemäßen Verfahrens vor, dass die Litzendrähte, insbesondere vor dem Einbringen in das Fluid-Leitungselement in wenigstens einem Abschnitt miteinander verbunden werden, vorzugsweise stoffschlüssig, sodass die Litze in dem Abschnitt einen verringerten Querschnitt aufweist, und bei der das Fluid-Leitungselement nach dem Einbringen der Litze in dem genannten Abschnitt an mehreren, in Umfangsrichtung voneinander beabstandeten Positionen, vorzugsweise an mindestens drei gleichmäßig voneinander beabstandeten Positionen, gegen die Litze verpresst wird, wobei höchst vorzugsweise Fluid-Leitungselement und Litze bei den genannten Positionen zusätzlich stoffschlüssig verbunden werden.

Auch diese Ausgestaltung wurde oben schon detailliert beschrieben. Durch das vorherige Verbinden der Litzendrähte ist sichergestellt, dass diese sich beim lokalen Verpressen des Leitungselements gegen die Litze nicht auffächern und beschädigt werden.

In Weiterbildung des erfindungsgemäßen Verfahrens zum Temperieren einer Stromleitung kann noch vorgesehen sein, dass das Temperierfluid in Form von (Druck-) Luft oder einem anderen Gas unmittelbar durch das Anschlussteil in das Fluid-Leitungselement eingeleitet (eingeblasen) und aus dem Fluid-Leitungselement ausgeleitet wird.

Eine besondere Abdichtung ist hierbei grundsätzlich nicht erforderlich, sodass sich eine besonders einfache Ausgestaltung ergibt.

In Weiterbildung des erfindungsgemäßen Verfahrens zum Temperieren einer Stromleitung kann außerdem noch vorgesehen sein, dass eine Temperierfluid-Leitung mit einem insbesondere flüssigen Temperierfluid, z.B. Öl, an das Verbindungselement angeschlossen und das Temperierfluid durch das Verbindungselement in das Fluid-Leitungselement eingeleitet oder aus dem Fluid-Leitungselement ausgeleitet wird.

Die Temperierleistung kann so deutlich erhöht werden.

In diesem Zusammenhang kommt bevorzugt eine der o.g. Ausgestaltungen mit EKE zum Einsatz, um das flüssige Temperierfluid in das Fluid-Leitungselement einzuleiten bzw. aus dem Fluid-Leitungselement auszuleiten.

Über die Temperierfluid-Leitung kann die Stromleitungsvorrichtung zudem vorteilhafter Weise auch elektrisch kontaktiert werden.

Weitere Eigenschaften und Vorteile der Erfindungen ergeben sich aus der nachfolgenden Beschreibung von Ausführungsbeispielen anhand der Zeichnung.
Figur 1 zeigt perspektivisch und im Längsschnitt eine erste Ausgestaltung der erfindungsgemäßen Stromleitungsvorrichtung;
Figur 2 zeigt eine andere Ansicht der Ausgestaltung in Figur 1;
Figur 3 zeigt perspektivisch und im Längsschnitt eine zweite Ausgestaltung der erfindungsgemäßen Stromleitungsvorrichtung;
Figur 4 zeigt eine andere Ansicht der Ausgestaltung in Figur 3;
Figur 5 zeigt Schnittansichten einer ersten Ausgestaltung zur Lokalisierung der Litze bei einer erfindungsgemäßen Stromleitungsvorrichtung;
Figur 6 zeigt Schnittansichten einer zweiten Ausgestaltung zur Lokalisierung der Litze bei einer erfindungsgemäßen Stromleitungsvorrichtung;
Figur 7 zeigt Schnittansichten einer dritten Ausgestaltung zur Lokalisierung der Litze bei einer erfindungsgemäßen Stromleitungsvorrichtung;
Figur 8 zeigt Schnittansichten einer vierten Ausgestaltung zur Lokalisierung der Litze bei einer erfindungsgemäßen Stromleitungsvorrichtung; und
Figur 9 zeigt schematisch und im Längsschnitt eine weitere Ausgestaltung der erfindungsgemäßen Stromleitungsvorrichtung.

In den Figuren bezeichnen gleiche Bezugszeichen jeweils gleiche oder gleichwirkende Elemente.

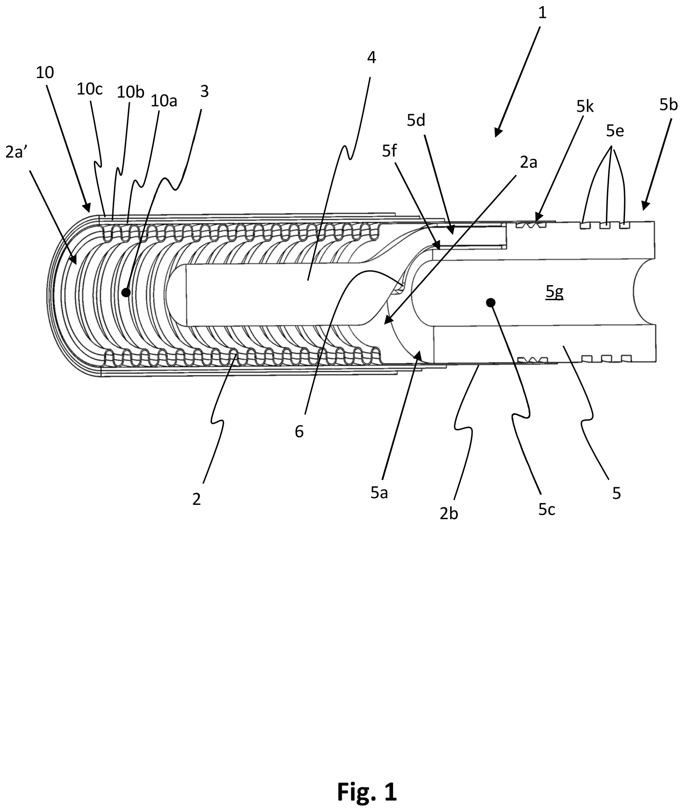

Figur 1 zeigt eine temperierbare Stromleitungsvorrichtung 1, die aus mehreren wesentlichen Komponenten besteht, die in einem rohrförmigen Fluid-Leitungselement 2 integriert sind. Das Fluid-Leitungselement (oder einfach Rohr) 2 ist bevorzugt aus einem elektrisch leitfähigen Werkstoff, vorzugsweise Metall wie Kupfer oder Aluminium einschließlich entsprechender Legierungen, gefertigt. Es weist zwei endständige Öffnungen 2a, 2a' auf, die an verschiedenen Enden des Fluid-Leitungselements 2 angeordnet sind und einen Freiraum 3 innerhalb des Fluid-Leitungselements 2 schaffen, der eine fluidleitende Verbindung zwischen den beiden Öffnungen 2a, 2a' ermöglicht.

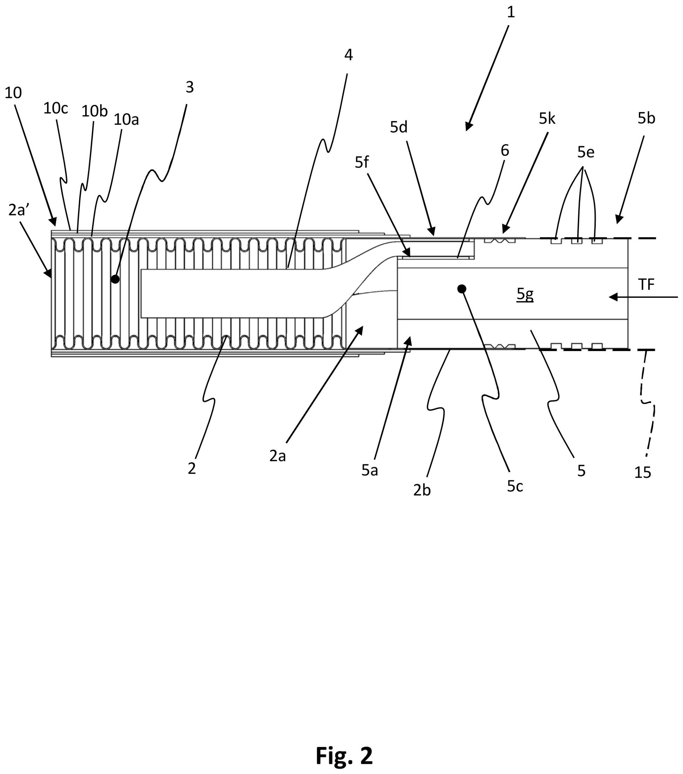

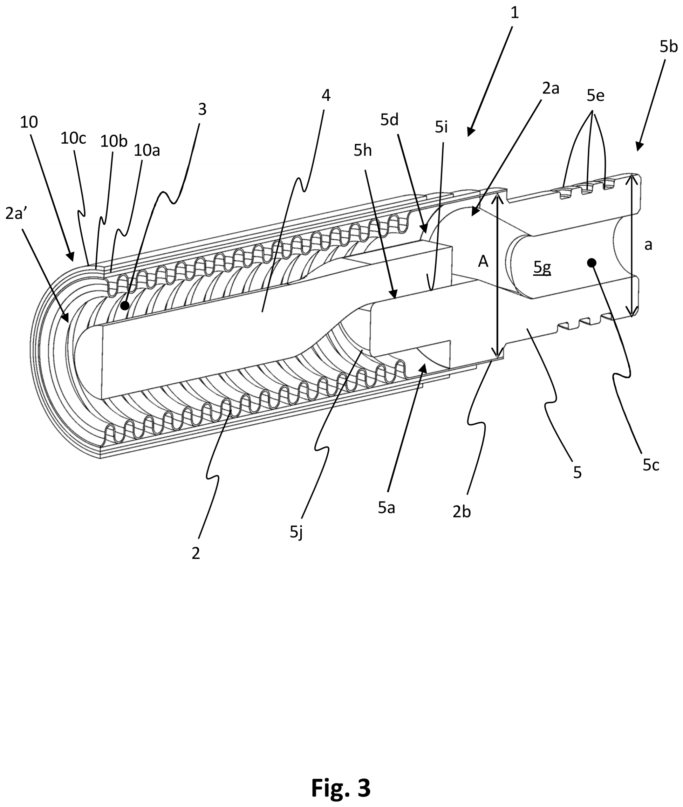

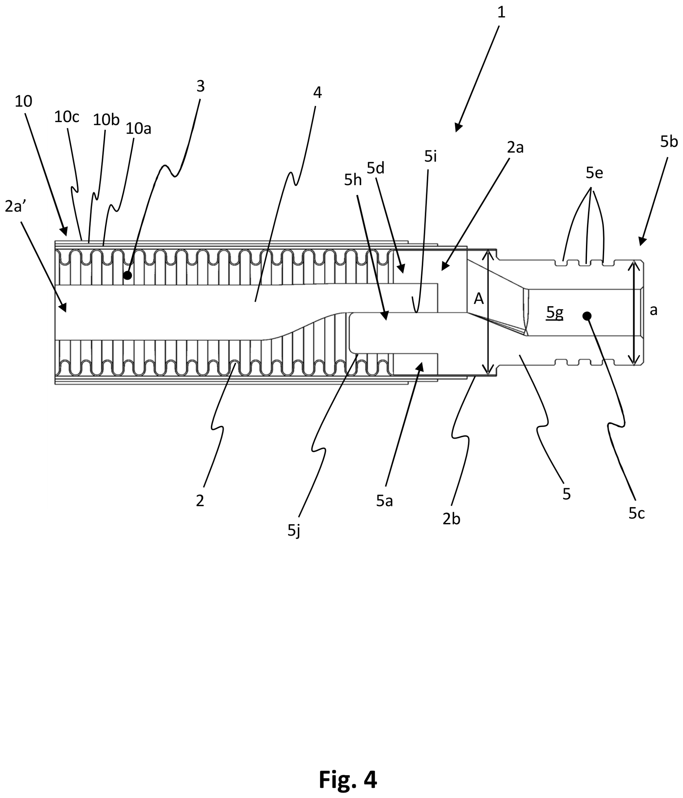

Innerhalb des Fluid-Leitungselements 2 ist eine Litze 4 mit mehreren Litzendrähten, vorzugsweise aus Kupfer, geführt. Die Litzendrähte sind hier nicht einzeln dargestellt. Diese Litze 4 erstreckt sich entlang des Fluid-Leitungselements 2 und ist mit einem rohrförmigen Anschlussteil 5 in einem Anschlussbereich 5d elektrisch leitend verbunden. Die Litze 4 ist bevorzugt zentral innerhalb des Rohes 2 geführt, worauf weiter unten noch genauer eingegangen wird. Sie erstreckt sich bevorzugt über die gesamte Länge des Rohres 2, obwohl sie in den Figuren 1 und 2 verkürzt dargestellt ist (vgl. Figuren 3 und 4).

Das Anschlussteil 5 besteht ebenfalls aus einem elektrisch leitfähigen Werkstoff, vorzugsweise aus einem Metall, wie Kupfer oder Aluminium einschließlich entsprechender Legierungen. Es ist mit seinem einen Ende 5a in eine der endständigen Öffnungen 2a des Fluid-Leitungselements 2 eingesetzt und fluiddicht mit dem Fluid-Leitungselement 2 verbunden, während sein anderes, freies Ende 5b aus dem Fluid-Leitungselement 2 herausragt.

Vorzugsweise ist die Stromleitungsvorrichtung 1 auch an dem anderen, nicht gezeigten Ende entsprechend ausgebildet.

Der Freiraum 3 erstreckt sich zumindest in Bereichen längs des Fluid-Leitungselements 2 um die Litze 4 herum und steht mit einem Inneren 5c des Anschlussteils 5 in Fluidverbindung. Das Anschlussteil 5 weist an seinem freien Ende 5b wenigstens eine umlaufende Nut 5e auf, in die eine Dichtung, vorzugsweise ein Dichtungsring, eingesetzt oder einsetzbar ist, was in der Figur nicht gezeigt ist. Alternativ können die umlaufenden Nuten 5e auch zur axialen Fixierung dienen, um eine ungewollte Demontage der Stromleitungsvorrichtung 1 von einem Kundensystemanschluss (am freien Ende 5b; in Figur 1 nicht gezeigt, vgl. Figur 2) zu verhindern. An seinem in das Fluid-Leitungselement 2 eingesetzten Ende 5a besitzt das Anschlussteil 5 eine sich über zumindest einen Teilumfang erstreckende, stirnseitig öffnende Ausnehmung 5f, in der die Litze 4 mit ihrem einen Ende angeordnet ist. Vorliegend erstreckt sich die Ausnehmung 5f in der Umfangsrichtung über den halben Umfang des Anschlussteils 5.

Das Anschlussteil 5 kann abweichend von der Darstellung auch mehrteilig, insbesondere zweiteilig ausgebildet sein. Das betrifft neben den Figuren 1 und 2 auch die Figuren 3 und 4. Beispielsweise kann das Anschlussteil 5 zweiteilig ausgebildet sein, wobei das Ende 5a mit der Litzenaufnahme ein Teil bildet, während das andere (freie) Ende 5b ein separates Bauteil darstellt. Die Verbindung dieser beiden Teile kann mittels einer Gewindestruktur oder stoffschlüssig erfolgen (allgemein: formschlüssig, kraftschlüssig und/oder stoffschlüssig).

Die Form des freien Endes 5b muss nicht rund sein. Weitere Formen, die in diesem Bereich Verwendung finden können, sind beispielsweise (flache) Kabelschuhe, eckige Stecker, etc.

Die Litze 4 oder die Litzendrähte sind im Bereich der Ausnehmung 5f von einem Ringteil 6 aus einem elektrisch leitfähigen Werkstoff, vorzugsweise einem Metall, wie Kupfer oder Aluminium einschließlich entsprechender Legierungen, eng anliegend umfangen. Das Ringteil 6 weist eine Außenkontur auf, die der Form der Ausnehmung 5f im Wesentlichen entspricht und so das Anschlussteil 5 komplettiert.

Das Fluid-Leitungselement 2 ist zumindest abschnittweise von einer elektromagnetisch wirksamen Abschirmung oder EMV-Abschirmung 10 umgeben. Diese Abschirmung 10 umfasst eine erste elektrische Isolierumhüllung 10a, die außen auf dem Fluid-Leitungselement 2 angeordnet ist, eine EMV-Abschirmschicht 10b, insbesondere aus einem Metallgeflecht oder in Form eines Folienschirms, und eine zweite elektrische Isolierumhüllung 10c, die außen auf der EMV-Abschirmschicht 10b angeordnet ist.

Zusätzlich ist das Fluid-Leitungselement 2 zumindest in einem Abschnitt flexibel ausgebildet, insbesondere gewellt, vorzugsweise ringgewellt oder wendelgewellt. Im Bereich der Öffnung 2a ist das Fluid-Leitungselements 2 glattzylindrisch ausgebildet (bei Bezugszeichen 2b). Das Anschlussteil 5 weist bei Bezugszeichen 5k eine Anzahl von Zacken auf, die in einer Vertiefung angeordnet sind und für eine gute Verbindung von Anschlussteil 5 und Fluid-Leitungselement 2 in dem glattzylindrischen Bereich 2b sorgen. Diese Verbindung kann durch Kleben, Stoffschluss (bevorzugt Schweißen), Klemmen, Verpressen oder dgl. erfolgen.

Diese detaillierte Beschreibung der Komponenten und ihrer Anordnung innerhalb der temperierbaren Stromleitungsvorrichtung 1 bietet eine umfassende technische Grundlage für das Verständnis der Funktionsweise und der Integration der verschiedenen Systemkomponenten.

Figur 2 zeigt die temperierbare Stromleitungsvorrichtung 1 gemäß Figur 1 an einer anderen Ansicht.

Wie man den Figuren 1 und 2 noch entnimmt, hat das Anschlussteil 5 hat einen geraden, vorzugsweise zentralen, Leitungskanal 5g, und die Litze 4 ist in Verlängerung des Leitungskanals 5g angeordnet, wobei sie axial von diesem beabstandet ist.

Das Anschlussteil 5 weist bei der gezeigten Ausführungsform an seinem freien Ende 5b einen gleichen (Außen-) Durchmesser auf wie das Fluid-Leitungselement 2 in dem glattzylindrischen Bereich 2b und kann, abweichend von der gezeigten Ausgestaltung in diesem Bereich als normierter Fluid-Anschlussstutzen, insbesondere VDA-Anschlussstutzen, ausgebildet sein. Abweichend ist aber auch sowohl ein kleinerer Durchmesser (vgl. Figuren 3 und 4) als auch ein größer Durchmesser des Anschlussteils 5 bezogen auf das Fluid-Leitungselement 2 möglich.

Gemäß Figur 2 ist die Stromleitungsvorrichtung 1 über das Anschlussteil 5 an eine nur schematisch gezeigte Temperierfluid-Leitung 15 angeschlossen. Auf diese Weise kann ein Temperierfluid TF, wie Luft oder Öl, durch das Fluid-Leitungselement 2 geleitet werden, wobei das Anschlussteil 5 als Ein- oder Auslass für das Temperierfluid TF dient. Vorzugsweise kann über die Leitung 15 auch ein elektrischer Stromfluss an die Stromleitungsvorrichtung 1 übergeben werden.

Die Figuren 3 und 4 zeigen eine detaillierte Darstellung einer anderen Ausgestaltung der temperierbaren Stromleitungsvorrichtung 1. Es sei nachfolgend nur auf die wesentlichen Unterschiede zu der Ausgestaltung gemäß den Figuren 1 und 2 näher eingegangen, auf deren Beschreibung ansonsten verwiesen werden kann.

Das Anschlussteil 5 weist bei dieser Ausgestaltung an seinem freien Ende 5b einen kleineren Außendurchmesser a auf als das Fluid-Leitungselement 2 (Außendurchmesser A) und kann abweichend von der Darstellung wiederum als normierter Fluid-Anschlussstutzen, insbesondere VDA-Anschlussstutzen, ausgebildet sein. Selbstverständlich ist die Erfindung nicht auf die nur exemplarisch gezeigten Durchmesserverhältnisse beschränkt. Auch ein gleicher Durchmesser wie in den Figuren 1 und 2 oder ein umgekehrtes Durchmesserverhältnis kommt in Betracht.

Der Leitungskanal 5g des Anschlussteils 5 knickt - anders als in den Figuren 1 und 2 - an dem in das Fluid-Leitungselement 2 eingesetztem Ende 5a des Anschlussteils 5 seitlich in Richtung einer Wandung des Fluid-Leitungselements 2 ab. Das Anschlussteil 5 weist in Verlängerung des Leitungskanals 5g einen inneren Vorsprung 5h auf, der sich etwa zentral innerhalb des Fluid-Leitungselements 2 axial über den Leitungskanal 5g hinaus erstreckt. Der Vorsprung 5h ist radial von der Wandung des Fluid-Leitungselements 2 beabstandet und besitzt eine ebene Oberseite 5i, an der die Litze 4 oder die Litzendrähte befestigt ist/sind, vorzugsweise bei entsprechender Abflachung/Verpressung. Die Unterseite 5j des Vorsprungs 5h ist abgerundet und erstreckt sich parallel zu einer Innenkontur des Fluid-Leitungselements 2. Die Litze 4 ist in Verlängerung des Leitungskanals 5g und axial von diesem beabstandet angeordnet.

Die detaillierte Darstellung in den Figuren 3 und 4 zeigt die präzise Anordnung und Verbindung der verschiedenen Komponenten der Stromleitungsvorrichtung 1, einschließlich der fluiddichten Verbindung des Anschlussteils 5 mit dem Fluid-Leitungselement 2 und der elektrischen Verbindung der Litze 4 mit dem Anschlussteil 5. Die Figur veranschaulicht auch weitere strukturellen Merkmale, wie die gewellte Ausbildung des Fluid-Leitungselements 2 oder die Anordnung der EMV-Abschirmung 10, die zur elektromagnetischen Verträglichkeit der Vorrichtung beiträgt.

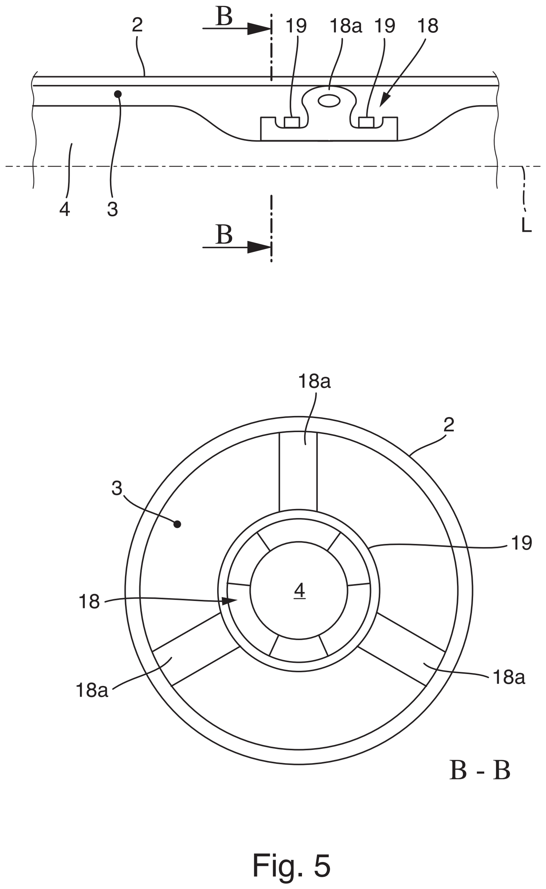

Figur 5 zeigt eine Möglichkeit der Führung der Litze 4 im Innern des Rohres 2, oben im Längsschnitt, darunter im Querschnitt entlang der Linie B-B.

Zwischen dem Fluid-Leitungselement (Rohr) 2 und der Litze 4 ist wenigstens ein Abstandhalter 18 angeordnet, der als ein ringförmiger Abstandhalter 18 mit (hier ohne Beschränkung drei) umfänglich beabstandeten Vorsprüngen 18a ausgebildet ist, welche Vorsprünge 18a von innen mit dem Rohr 2 wechselwirken. Der Abstandhalter 18 ist mittels Kabelbinder 19 oder dgl. auf der Litze 4 gehalten und verringert deren Querschnitt, wobei die Litze 4 auf das Zentrum der Anordnung entlang der Längsachse L fixiert ist. Zwischen den Vorsprüngen 18a kann das Temperierfluid ungehindert strömen.

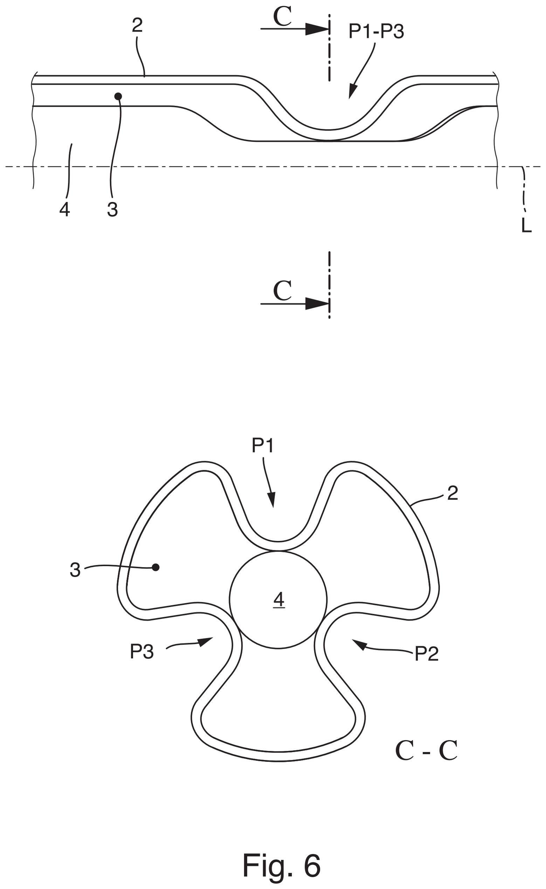

Figur 6 zeigt eine weitere Möglichkeit der Führung der Litze 4 im Innern des Rohres 2, oben im Längsschnitt, darunter im Querschnitt entlang der Linie C-C.

Bei der gezeigten Stromleitungsvorrichtung 1 sind die Litzendrähte in wenigstens einem Abschnitt miteinander verbunden, vorzugsweise stoffschlüssig, z.B. durch Ultraschallschweißen, sodass die Litze 4 in dem Abschnitt einen verringerten Querschnitt aufweist, vgl. die Schnittebene C-C. Das Fluid-Leitungselement 2 ist in dem genannten Abschnitt an mehreren, in Umfangsrichtung voneinander beabstandeten Positionen P1-P3, vorzugsweise mindestens drei gleichmäßig voneinander beabstandeten Positionen P1-P3, gegen die Litze 4 verpresst, wobei höchst vorzugsweise Fluid-Leitungselement 2 und Litze 4 bei den genannten Positionen P1-P3 zusätzlich stoffschlüssig verbunden sind.

Auch bei der Ausgestaltung gemäß Figur 6 ist es vorteilhaft, wenn die Litzendrähte der Litze 4 vor Anbringen des Abstandhalters 18 in dem betreffenden Abschnitt miteinander verbunden werden, vorzugsweise stoffschlüssig, z.B. durch Ultraschallschweißen, sodass die Litze 4 in dem Abschnitt einen verringerten Querschnitt aufweist.

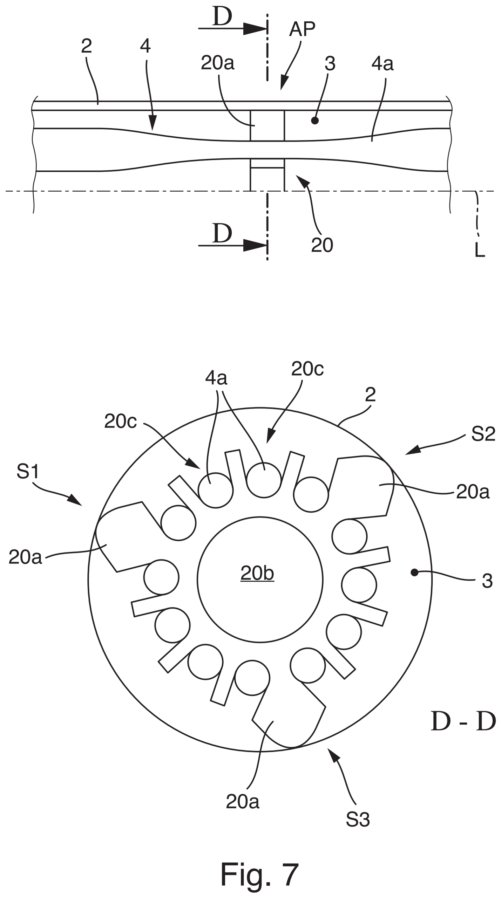

Figur 7 zeigt noch eine weitere Möglichkeit der Führung der Litze 4 im Innern des Rohres 2, oben im Längsschnitt, darunter im Querschnitt entlang der Linie D-D.

Bei der gezeigten Stromleitungsvorrichtung sind die einzelnen Litzendrähte (oder Bündel von Litzendrähten) 4a an wenigstens einem ringförmigen Halteelement 20 gehalten, das bei einer axialen Position AP in das Fluid-Leitungselement 2 eingesetzt ist und sich an mehreren, über den Umfang verteilten Stellen S1-S3 mit entsprechenden Vorsprüngen 20a von innen an dem Fluid-Leitungselement 2 abstützt. Das Halteelement 20 ist vorzugsweise in einem elastischen Kunststoff ausgebildet und weist einen zentralen Durchbruch 20b zur Fluiddurchleitung auf. Es besitzt an seiner Außenseite eine Mehrzahl von Aufnahmen oder Vertiefungen 20c (nur teilweise bezeichnet) für einzelne Litzendrähte (oder Litzendrahtbündel) 4a, um diese in Position zu halten.

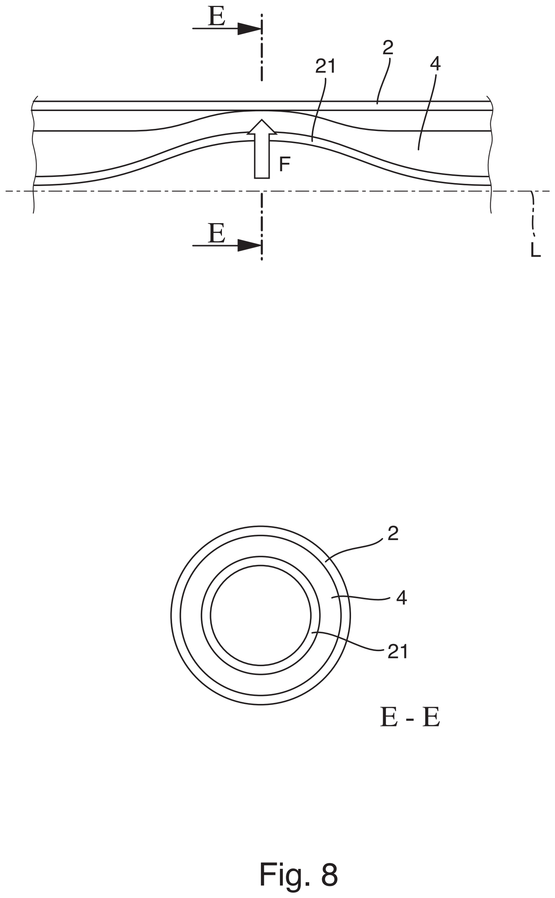

Figur 8 zeigt eine wieder andere Möglichkeit der Führung der Litze 4 im Innern des Rohres 2, oben im Längsschnitt, darunter im Querschnitt entlang der Linie E-E.

Bei der gezeigten Stromleitungsvorrichtung ist in dem Fluid-Leitungselement 2 zumindest in einem Bereich ein hülsenförmiges elastisches Element 21 eingesetzt, welches Element 21 lokal eine Kraft F nach außen gegen eine Innenseite des Fluid-Leitungselements 2 ausübt und so die Litze 4 oder die einzelnen Litzendrähte (oder Bündel von Litzendrähten) an der Innenseite des Fluid-Leitungselements 2 in Anlage bringt. Das elastische Element 21 besteht vorzugsweise aus einer Formgedächtnislegierung oder ist als Geflechthülse aus Federstahl ausgebildet, vorzugsweise nach Art eines Stents, wie aus der Medizintechnik grundsätzlich bekannt.

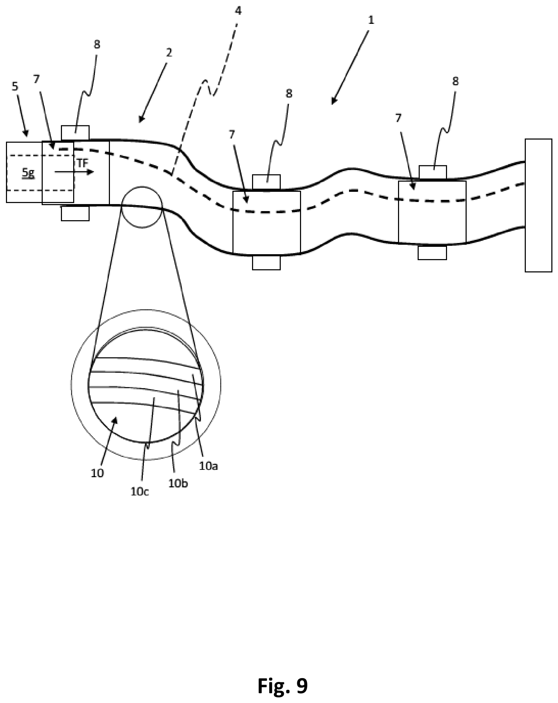

Figur 9 zeigt eine alternative Ausgestaltung der temperierbaren Stromleitungsvorrichtung 1, die wiederum aus mehreren wesentlichen Komponenten besteht. Die Stromleitungsvorrichtung 1 umfasst ein rohrförmiges Fluid-Leitungselement 2, das aus einem elektrisch leitfähigen Werkstoff, vorzugsweise einem Metall, insbesondere Kupfer oder Aluminium einschließlich entsprechender Legierungen, gefertigt ist. Das Fluid-Leitungselement 2 weist mehrere (Rohr-) Segmente 7 auf, die durch eine fluiddichte mehrschichtige Anordnung in Form einer elektromagnetisch wirksame Abschirmung 10 verbunden sind, die in einem vergrößerten Detailausschnitt der Abbildung dargestellt ist. Diese Abschirmung 10 besteht wiederum aus mehreren Schichten: einer ersten Isolierung 10a, die außen auf dem Fluid-Leitungselement 2 bzw. deren Segmenten 7 angeordnet ist; einer EMV-Abschirmschicht 10b, die vorzugsweise aus einem Metallgeflecht besteht; und einer zweiten Isolierung 10c, die außen auf der EMV-Abschirmschicht 10b angeordnet ist. Diese Schichten bieten sowohl eine thermische und/oder elektrische Isolierung als auch eine elektromagnetische Abschirmung, um die Funktionalität und Sicherheit der Stromleitungsvorrichtung 1 zu gewährleisten. Äußere Verpressringe 8 halten die Abschirmung 10 auf den jeweiligen Segmenten 7, um insbesondere eine fluiddichte Verbindung zu gewährleisten, die in erster Linie durch die innere Isolierung 10a sichergestellt ist.

Als Materialien für die innere Isolierung 10a und die äußere Isolierung 10c kommen insbesondere Kunststoffe, wie Polyamid, Polypropylen, Polyvinylchlorid, Polyurethan, in Betracht, die bevorzugt bei der vorteilhaften Endlosfertigung auch extrudiert werden können.

Wenigstens ein (endständiges) Segment 7 des Rohres 2 weist ein Anschlussteil 5 auf, wie in den Figuren 1 bis 4 gezeigt in weiter oben detailliert beschrieben. Durch dessen Leitungskanal 5g kann wiederum ein Temperierfluid TF durch das Rohr 2 geschickt werden.

Innerhalb des Fluid-Leitungselements 2 bzw. der fluidleitend verbundenen Segmente 7 ist wiederum eine Litze 4 mit mehreren Litzendrähten (nicht gezeigt) geführt, die mittels des Temperierfluids TF gekühlt (oder erwärmt) werden kann. Diese Litze 4 ist vorzugsweise aus Kupfer gefertigt und erstreckt sich entlang des gesamten Fluid-Leitungselements 2. Die Litze 4 ist in einem Anschlussbereich 5d (vgl. Figuren 1 bis 4) mit einem rohrförmigen Anschlussteil 5 elektrisch leitend verbunden.

Das Anschlussteil 5 ist ebenfalls aus einem elektrisch leitfähigen Werkstoff, vorzugsweise Kupfer oder Aluminium einschließlich entsprechender Legierungen, gefertigt und ist mit seinem einen Ende 5a in eine der endständigen Öffnungen 2a des Fluid-Leitungselements 2 eingesetzt und fluiddicht mit diesem verbunden. Das andere, freie Ende 5b des Anschlussteils 5 ragt aus dem Fluid-Leitungselement 2 heraus und dient zum Einleiten des Temperierfluids TF und zum Einleiten/Ausleiten eines elektrischen Stroms. Hierauf wurde oben schon eingehend hingewiesen.

Zusammenfassend zeigt die Abbildung 9 eine detaillierte Darstellung der temperierbaren Stromleitungsvorrichtung 1 mit ihren wesentlichen Komponenten und deren Anordnung. Die Kombination aus dem segmentierten rohrförmigen Fluid-Leitungselement 2, der Litze 4, dem Anschlussteil 5, den Verpressringen 8 und der elektromagnetisch wirksamen Abschirmung 10 gewährleistet eine effektive und sichere Funktion der Vorrichtung, die insgesamt flexibler eingesetzt werden kann als die Vorrichtung gemäß den Figuren 1 bis 4, wobei sie zudem leichter und kostengünstiger ist.

Grundsätzlich lassen sich die Ausgestaltungen gemäß den Figuren 5 bis 8 bei allen Stromleitungsvorrichtungen 1 gemäß den Figuren 1 bis 4 und 9 einsetzen, ggf. auch in Kombination.

## Patentansprüche

1. Temperierbare Stromleitungsvorrichtung (1), aufweisend:
ein rohrförmiges Fluid-Leitungselement (2), bevorzugt aus einem elektrisch leitfähigen Werkstoff, insbesondere Metall, vorzugsweise Kupfer oder Aluminium einschließlich entsprechender Legierungen;
wenigstens zwei endständige Öffnungen (2a, 2a') des Fluid-Leitungselements (2), welche Öffnungen (2a, 2a') vorzugsweise an verschiedenen Enden des Fluid-Leitungselements (2) angeordnet sind;
einen Freiraum (3) innerhalb des Fluid-Leitungselements (2), welcher Freiraum (3) eine fluidleitende Verbindung zwischen den beiden Öffnungen (2a, 2a') schafft;
eine Litze (4) mit mehreren Litzendrähten, vorzugsweise aus Kupfer, die in dem Fluid-Leitungselement (2) geführt ist; und
wenigstens ein rohrförmiges Anschlussteil (5) aus einem elektrisch leitfähigen Werkstoff, insbesondere Metall, vorzugsweise Kupfer oder Aluminium einschließlich entsprechender Legierungen, das mit seinem einen Ende (5a) in eine der endständigen Öffnungen (2a, 2a') des Fluid-Leitungselements (2) eingesetzt und fluiddicht mit dem Fluid-Leitungselements (2) verbunden ist und das mit seinem anderen, freien Ende (5b) aus dem Fluid-Leitungselement (2) herausragt;
wobei der Freiraum (3) sich zumindest in Bereichen längs des Fluid-Leitungselements (2) um die Litze (4) herum erstreckt und mit einem Inneren (5c) des Anschlussteils (5) in Fluidverbindung steht; und
die Litze (4) oder die Litzendrähte in wenigstens einem Anschlussbereich (5d) mit dem Anschlussteil (5) elektrisch leitend verbunden ist.

2. Stromleitungsvorrichtung (1) nach Anspruch 1, bei der die Litze (4) oder die Litzendrähte in dem Anschlussbereich (5d) an das Anschlussteil (5) angelegt ist bzw. sind, vorzugsweise angepresst oder stoffschlüssig angebunden, oder umgekehrt.

3. Stromleitungsvorrichtung (1) nach einem der Ansprüche 1 bis 2, bei der das Anschlussteil (5) an seinem in das Fluid-Leitungselement (2) eingesetzten einen Ende (5a) eine sich über zumindest einen Teilumfang erstreckende, stirnseitig öffnende Ausnehmung (5f) aufweist, in der die Litze (4) mit ihrem einen Ende angeordnet ist, wobei vorzugsweise der Teilumfang etwa dem halben Umfang des Anschlussteils (5) entspricht und höchst vorzugsweise die Litze (4) oder die Litzendrähte über den Teilumfang aufgefächert sind.

4. Stromleitungsvorrichtung (1) nach Anspruch 3, bei der
das Anschlussteil (5) einen geraden, vorzugsweise zentralen, Leitungskanal (5g) aufweist und die Litze (4) in Verlängerung des Leitungskanals (5g) und, vorzugsweise im Anschluss an die Auffächerung, axial von diesem beabstandet angeordnet ist.

5. Stromleitungsvorrichtung (1) nach einem der Ansprüche 1 bis 2, bei der ein Leitungskanal (5g) des Anschlussteils (5) an dessen in das das Fluid-Leitungselement (2) eingesetztem Ende (5a) seitlich in Richtung einer Wandung des Fluid-Leitungselements (2) abknickt, wobei das Anschlussteil (5) einen inneren Vorsprung (5h) aufweist, der sich etwa zentral innerhalb des Fluid-Leitungselements (2) axial über den Leitungskanal (5g) hinaus erstreckt, wobei vorzugsweise der Vorsprung (5h) radial von der Wandung des Fluid-Leitungselements (2) beabstandet ist.

6. Stromleitungsvorrichtung (1) nach Anspruch 5, bei der
der Vorsprung (5h) eine ebene Oberseite (5i) aufweist, an der die Litze (4) oder die Litzendrähte befestigt ist/sind.

7. Stromleitungsvorrichtung (1) nach einem der Ansprüche 1 bis 6, bei der zwischen dem Fluid-Leitungselement (2) und der Litze (4) wenigstens ein Abstandhalter (18) angeordnet ist, vorzugsweise ein ringförmiger Abstandhalter (18) mit umfänglich beabstandeten Vorsprüngen (18a).

8. Stromleitungsvorrichtung (1) nach einem der Ansprüche 1 bis 7, bei der die Litzendrähte in wenigstens einem Abschnitt miteinander verbunden sind, vorzugsweise stoffschlüssig, sodass die Litze (4) in dem Abschnitt einen verringerten Querschnitt aufweist, und bei der das Fluid-Leitungselement (2) in dem genannten Abschnitt an mehreren, in Umfangsrichtung voneinander beabstandeten Positionen (P1-P3), vorzugsweise mindestens drei gleichmäßig voneinander beabstandeten Positionen (P1-P3), gegen die Litze (4) verpresst ist, wobei höchst vorzugsweise Fluid-Leitungselement (2) und Litze (4) bei den genannten Positionen (P1-P3) zusätzlich stoffschlüssig verbunden sind.

9. Stromleitungsvorrichtung (1) nach einem der Ansprüche 1 bis 8, bei der die Litzendrähte (4a) an wenigstens einem ringförmigen Halteelement (20) gehalten sind, das bei einer axialen Position (AP) in das Fluid-Leitungselement (2) eingesetzt ist und sich an mehreren Stellen (S1-S3) von innen an dem Fluid-Leitungselement (2) abstützt, welches Halteelement (20) einen zentralen Durchbruch (20b) zur Fluiddurchleitung und vorzugsweise an seiner Außenseite eine Mehrzahl von Aufnahmen (20c) für einzelne Litzendrähte (4a) aufweist.

10. Stromleitungsvorrichtung (1) nach einem der Ansprüche 1 bis 9, bei der in dem Fluid-Leitungselement (2) in einem Bereich ein elastisches Element (21) eingesetzt ist, welches Element (21) lokal eine Kraft (F) nach außen gegen eine Innenseite des Fluid-Leitungselements (2) ausübt und die Litzendrähte an der Innenseite in Anlage bringt, wobei vorzugsweise das elastische Element (21) aus einer Formgedächtnislegierung besteht oder als Geflechthülse aus Federstahl ausgebildet ist, höchst vorzugsweise nach Art eines Stents.

11. Stromleitungsvorrichtung (1) nach einem der Ansprüche 1 bis 10, bei der das Fluid-Leitungselement (2) zumindest abschnittweise, bevorzugt in einem Abschnitt zwischen den beiden Öffnungen (2a, 2a'), von einer elektromagnetisch wirksamen Abschirmung oder EMV-Abschirmung (10) umgeben ist, welche Abschirmung (10) vorzugsweise umfasst: eine erste elektrische Isolierumhüllung (10a), die außen auf dem Fluid-Leitungselement (2) angeordnet ist; eine EMV-Abschirmschicht (10b), insbesondere aus einem Metallgeflecht; und eine zweite elektrische Isolierumhüllung (10c), die außen auf der EMV-Abschirmschicht (10b) angeordnet ist.

12. Stromleitungsvorrichtung (1) nach einem der Ansprüche 1 bis 11, bei der das Fluid-Leitungselement (2) zumindest abschnittweise eine thermisch und/oder elektrisch isolierende Außenisolierung (10c) aufweist, die vorzugsweise durch Extrusion von außen auf das Fluid-Leitungselement (2) aufgebracht ist, und/oder
das Fluid-Leitungselement (2) zumindest abschnittweise eine thermisch und/oder elektrisch isolierende Innenisolierung (10a) aufweist, die vorzugsweise durch Extrusion von innen auf das Fluid-Leitungselement (2) aufgebracht und die höchst vorzugsweise fluiddicht ausgebildet ist.

13. Verfahren zur bevorzugt endlosen Herstellung einer temperierbaren Stromleitungsvorrichtung (1), beinhaltend:
a) Herstellen eines rohrförmigen Fluid-Leitungselements (2) aus einem elektrisch leitfähigen Werkstoff, insbesondere Metall, vorzugsweise Kupfer oder Aluminium einschließlich entsprechender Legierungen, insbesondere indem zunächst durch Biegen oder Walzen von Blech ein Hohlkörper hergestellt wird, der dann an den Stößen verschweißt wird, vorzugsweise nach erfolgtem Einbringen einer Litze (4) mit mehreren Litzendrähten, vorzugsweise aus Kupfer, deren Länge der gewünschten Länge in Schritt e) entspricht, in das Fluid-Leitungselement (2);
b) optional Ausbilden wenigstens eines gewellten Abschnitts des Fluid-Leitungselements (2), insbesondere durch Druckeinwirkung von au-ßen oder von innen;
c) optional Reinigen des Fluid-Leitungselements (2);
d) optional Anbringen einer EMV-Abschirmung (10b), insbesondere mit den Merkmalen in Anspruch 11, und/oder einer Außenisolierung (10c) mit den Merkmalen in Anspruch 12 und/oder einer Innenisolierung (10a) mit den Merkmalen in Anspruch 12;
e) Ablängen des Fluid-Leitungselements (2) einschließlich der optionalen EMV-Abschirmung (10b), Innenisolierung (10a) und Außenisolierung (10c) auf eine gewünschte Länge;
f) optionales zusätzliches Einkürzen der optionalen EMV-Abschirmung (10b), Innenisolierung (10a) und Außenisolierung (10c);
g) Einsetzen wenigstens eines rohrförmigen Anschlussteils (5) aus einem elektrisch leitfähigen Werkstoff, insbesondere Metall, vorzugsweise Kupfer oder Aluminium einschließlich entsprechender Legierungen, mit seinem einen Ende (5a) in eine der endständigen Öffnungen (2a, 2a') des Fluid-Leitungselements (2) und fluiddichtes Verbinden des rohrförmigen Anschlussteils (5) mit dem Fluid-Leitungselements (2), sodass das Anschlussteil (5) mit seinem anderen, freien Ende (5b) aus dem Fluid-Leitungselement (2) herausragt, und
h) elektrisch leitfähiges Verbinden der Litze (4) oder der Litzendrähte in wenigstens einem Anschlussbereich (5d) mit dem Anschlussteil (5), verzugsweise durch Anpressen oder stoffschlüssiges Fügen, wobei vorzugsweise das Einbringen der Litze (4) durch Einlegen der Litze (4) in das Fluid-Leitungselement (2) bei dessen Herstellung in Schritt a) und gemeinsames Ablängen in Schritt e) erfolgt.

14. Verfahren nach Anspruch 13, bei dem
die Litzendrähte (4a), insbesondere vor dem Einbringen in das Fluid-Leitungselement (2) in wenigstens einem Abschnitt miteinander verbunden werden, vorzugsweise stoffschlüssig, sodass die Litze (4) in dem Abschnitt einen verringerten Querschnitt aufweist, und bei der das Fluid-Leitungselement (2) nach dem Einbringen der Litze (4) in dem genannten Abschnitt an mehreren, in Umfangsrichtung voneinander beabstandeten Positionen (P1-P3), vorzugsweise an mindestens drei gleichmäßig voneinander beabstandeten Positionen (P1-P3), gegen die Litze (4) verpresst wird, wobei höchst vorzugsweise Fluid-Leitungselement (2) und Litze (4) bei den genannten Positionen (P1-P3) zusätzlich stoffschlüssig verbunden werden.

15. Verfahren zum Temperieren einer Stromleitung, beinhaltend:
a) Bereitstellen einer Stromleitungsvorrichtung (1) nach einem der Ansprüche 1 bis 12;
b) elektrisches Kontaktieren der Stromleitungsvorrichtung (1) über das Anschlussteil (5);
c) Leiten eines Temperierfluids, insbesondere Luft oder Öl, durch das Fluid-Leitungselement (2) durch das Anschlussteil (5);
wobei vorzugsweise das Temperierfluid in Form von Luft oder einem anderen Gas unmittelbar durch das Anschlussteil (5) in das Fluid-Leitungselement (2) eingeleitet oder aus dem Fluid-Leitungselement (2) ausgeleitet wird.
